# EUROPÄISCHE PATENTANMELDUNG

(11) **EP 1 371 812 A1**
(43) Veröffentlichungstag der Anmeldung: **17.12.2003**
(21) Anmeldenummer: 03101404.6
(22) Anmeldetag: 19.05.2003
(51) Int. Cl.: F01D 5/00, B23P 6/00

(54) **Verfahren zum Reparieren von beschädigten Laufschaufeln des Turbinenteils einer Gasturbine**

(30) Priorität: 04.06.2002 CH 9682002
(71) Anmelder: ALSTOM (Switzerland) Ltd, 5401 Baden (CH)
(72) Erfinder: Baumann, Robert, 5313, Klingnau (CH); Bordenet, Bettina, 5200, Brugg (CH)

(57) **Zusammenfassung**

Bei einem Verfahren zum Reparieren von beschädigten Laufschaufeln (17) des Turbinenteils (11) einer Gasturbine (10) wird zumindest die Oberfläche der im Turbinenteil (11) sitzenden und von einem Heissgasgehäuse umgebenden Laufschaufeln (17) von aussen durch eine geeignete Öffnung (23) bearbeitet.

Ein solches Verfahren ist besonders einfach und mit minimalen Stillstandszeiten durchzuführen, wenn diejenigen Laufschaufeln (17) bearbeitet werden, welche am Eingang des Turbinenteils (11) in einer ersten Reihe hinter einer ersten Reihe von Leitschaufeln (16) angeordnet sind, und wenn als Öffnungen zum Bearbeiten der Laufschaufeln (17) die Zwischenräume (23) zwischen den Leitschaufeln (16) der ersten Reihe verwendet werden.

## Beschreibung

### TECHNISCHES GEBIET

Die vorliegende Erfindung bezieht sich auf das Gebiet der Technik von Gasturbinen. Sie betrifft ein Verfahren zum Reparieren von beschädigten Laufschaufeln des Turbinenteils einer Gasturbine gemäss dem Oberbegriff des Anspruchs 1.

Ein solches Verfahren ist z.B. aus der Druckschrift US-A-5,644,394 bekannt.

### STAND DER TECHNIK

Die Beschaufelung von Gasturbinen ist im Betrieb verschiedenen Belastungen ausgesetzt. Dies gilt insbesondere für die Schaufelreihen im Turbinenteil der Gasturbine, wo die aus der Brennkammer kommenden heissen Verbrennungsgase unter Arbeitsleistung entspannt werden. Es versteht sich von selbst, dass von den Schaufelreihen des Turbinenteils besonders die ersten Reihen belastet sind, weil hier die Gastemperaturen und Geschwindigkeiten am höchsten sind.

Da die Betriebstemperaturen von Gasturbinen zur Erhöhung des Wirkungsgrades immer weiter erhöht werden, müssen für die Schaufeln immer höherwertige Werkstoffe eingesetzt werden. Gleichzeitig werden die Schaufeln auf unterschiedliche Weise mit Schutzschichten überzogen, um das Schaufelmaterial vor dem Angriff der aggressiven heissen Gase zu schützen und die Standzeit zu verlängern.

Während des Betriebs kann es jedoch zum partiellen Ablösen bzw. Abblättern dieser Wärmeschutzschichten kommen. Da ein Austausch von derart beschädigten Schaufeln extrem aufwendig ist und zu langen Stillstandszeiten der Gasturbine führen würde, besteht der Wunsch, die Schaufeln im eingebauten Zustand zu reparieren, indem die schadhaften Bereiche der Beschichtung ersetzt und ggf. andere Schäden an den Schaufeln vor Ort behoben werden.

In der eingangs genannten Druckschrift US-A-5,644,394 ist bereits vorgeschlagen worden, durch kleine Inspektionsöffnungen im Gehäuse einer Gasturbine ein spezielles anpassbares Bearbeitungswerkzeug mit einem rotierenden Schleifkopf nach Art eines Katheters in das Innere der Maschine einzuführen, um - optisch kontrolliert durch eine miteingeführte Kameraeinrichtung - beschädigte Vorderkanten von in der Turbine eingebauten Schaufeln zu bearbeiten. Hierbei ist es notwendig, für unterschiedlich angeordnete Schaufeln unterschiedlich geformte Werkzeugeinsätze zu verwenden.

### DARSTELLUNG DER ERFINDUNG

Es ist Aufgabe der Erfindung, ein Verfahren anzugeben, mit welchem auf besonders einfache Weise die besonders stark belasteten Laufschaufeln im Turbinenteil einer Gasturbine zu Reparaturzwecken bearbeitet werden kann, ohne dass der Turbinenteil demontiert werden muss.

Die Aufgabe wird durch die Gesamtheit der Merkmale des Anspruchs 1 gelöst. Der Kern der Erfindung besteht darin, die Laufschaufeln der ersten Reihe durch die Zwischenräume zwischen den am Eingang des Turbinenteils angeordneten Leitschaufeln zu bearbeiten. Da diese Zwischenräume über den Umfang verteilt angeordnet sind und ähnliche Abmessungen haben wie die Laufschaufeln der ersten Reihe, lassen sich so unter weitgehend gleichen Bedingungen alle Laufschaufeln der ersten Reihe vergleichsweise einfach mit zur Reparatur geeigneten Werkzeugen erreichen.

Eine bevorzugte Ausgestaltung des Verfahrens nach der Erfindung zeichnet sich dadurch aus, dass zur Bearbeitung der Laufschaufeln Bearbeitungsvorrichtungen verwendet werden, welche von aussen durch die Zwischenräume zwischen den Leitschaufeln der ersten Reihe bis zu den Laufschaufeln einführbar sind, und dass die Bearbeitungsvorrichtungen in sich beweglich, insbesondere biegsam, und/oder ein- oder mehrfach gelenkig ausgebildet sind.

Für die Oberflächenbehandlung der Laufschaufeln ist es besonders vorteilhaft, wenn die Bearbeitungsvorrichtungen eine Schleifvorrichtung zum Schleifen und/oder Polieren der Oberfläche der Laufschaufeln, einen Pinsel zum Auftragen eines Flüssigkeitsfilms auf die Oberfläche der Laufschaufeln, eine Vorrichtung zum Trocknen eines auf der Oberfläche der Laufschaufeln befindlichen Flüssigkeitsfilms, insbesondere in Form eines Heissluftgebläses, umfassen.

Wenn die Laufschaufeln auf ihrer Oberfläche mit einer schützenden Beschichtung versehen sind, werden bevorzugt durch die Bearbeitung im Betrieb der Gasturbine entstandene fehlerhafte Bereiche der Beschichtung entfernt und durch eine Ersatzbeschichtung ersetzt.

Insbesondere zeichnet sich das Reparaturverfahren dadurch aus, dass in einem ersten Schritt durch einen Schleifprozess die fehlerhafte Beschichtung entfernt wird, dass in einem zweiten Prozess im Bereich der entfernten Beschichtung ein Film aufgetragen wird, welcher bei einer anschliessenden thermischen Behandlung eine schützende Ersatzbeschichtung ausbildet, und dass in einem dritten Schritt die mit dem Film versehenen Laufschaufeln einer thermischen Behandlung unterzogen werden.

Bevorzugt wird der Film in flüssiger Form auf die Oberfläche der Laufschaufeln aufgetragen und vor der anschliessenden thermischen Behandlung einem Trocknungsprozess unterworfen.

Die Haftung der Ersatzschicht kann dabei dadurch verbessert werden, dass die Oberfläche der Laufschaufeln vor dem Aufbringen des Films, insbesondere durch Ätzen, aufgerauht wird.

Eine weitere Verbesserung ergibt sich, wenn die Oberfläche der Laufschaufeln unmittelbar nach dem Schleifen poliert wird, und wenn der Film mehrfach aufgetragen und zwischen zwei Auftragsvorgängen jeweils einem Trocknungsprozess unterworfen wird.

Grundsätzlich ist es denkbar, die thermische Behandlung des aufgebrachten Films separat durchzuführen. Besonders einfach wird der Prozess jedoch, wenn als thermische Behandlung das Aufheizen der Gasturbine bei der auf die Reparatur folgenden Inbetriebnahme verwendet wird.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: im Längsschnitt den Eingangsbereich des Turbinenteils einer Gasturbine;
- Fig. 2: den Blick auf den Eingangsbereich des Turbinenteils aus Fig. 1 in axialer Richtung;
- Fig. 3: den Blick in radialer Richtung auf die ersten Reihen der Leitschaufeln und Laufschaufeln des Turbinenteils nach Fig. 1 mit einer schematischen Darstellung des Einsatzes verschiedener Arten von Schleifvorrichtungen im Rahmen der Erfindung;
- Fig. 4: in einer zu Fig. 3 vergleichbaren Darstellung den Einsatz eines Pinsels zum Auftragen eines flüssigen Films auf die Laufschaufeln der ersten Reihe;
- Fig. 5: in einer zu Fig. 3 vergleichbaren Darstellung den Einsatz eines Heissluftgebläses zum Trocknen eines auf die Laufschaufeln der ersten Reihe aufgetragenen flüssigen Films; und
- Fig. 6: in einem Blockdiagramm die verschiedenen Schritte eines Reparaturverfahrens gemäss einem bevorzugten Ausführungsbeispiel der Erfindung.

### WEGE ZUR AUSFÜHRUNG DER ERFINDUNG

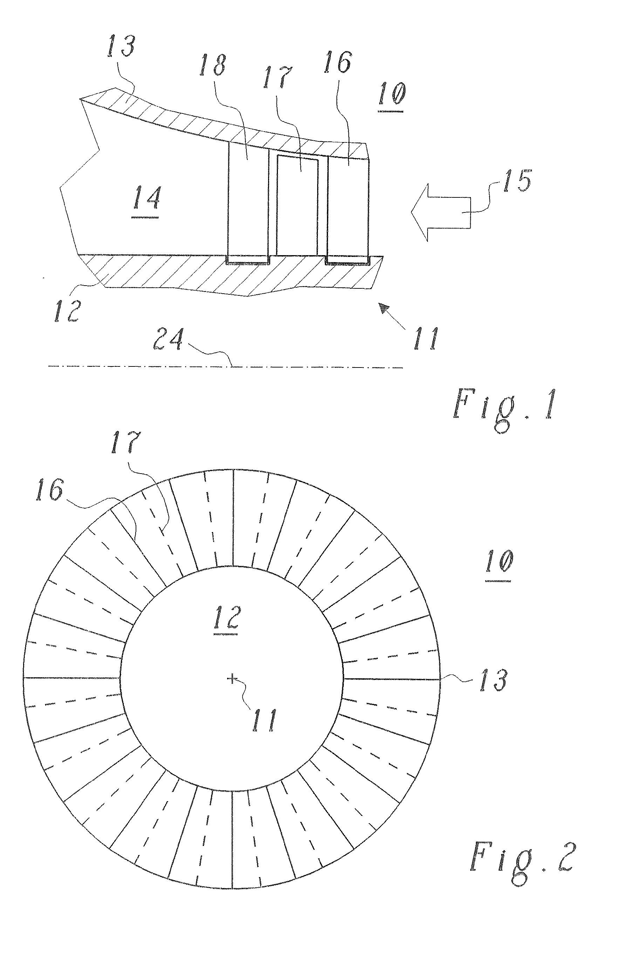

In Fig. 1 ist im Längsschnitt der Eingangsbereich des Turbinenteils 11 einer Gasturbine 10 dargestellt. Auf einem um die Achse 24 drehbar gelagerten Rotor 12 sind hintereinander mehrere Reihen von Laufschaufeln angeordnet, von denen der Einfachheit halber nur die erste Reihe von Laufschaufeln 17 eingezeichnet ist. Zwischen den Laufschaufelreihen sind Reihen von Leitschaufeln 16, 18 angeordnet, die an einem Heissgasgehäuse 13 befestigt sind, welches den Rotor 12 konzentrisch umgibt. Der Zwischenraum zwischen der Rotorwelle und dem Heissgasgehäuse 13 bildet einen Heissgaskanal 14, durch den von rechts nach links Heissgas 15 strömt und unter Arbeitsleistung entspannt wird. Das Heissgas 15 kommt aus einer (in Fig. 1 nicht dargestellten) Brennkammer, an deren Ausgang der Turbinenteil 11 anschliesst. Eine Konfiguration dieser Art ist beispielsweise in der US-A-5,575,617 dargestellt. Zur Brennkammer hin ist vor der ersten Reihe der Laufschaufeln 17 die erste Reihe der Leitschaufeln 16 platziert.

Die Laufschaufeln 17 sind als erste Laufschaufelreihe einer besonders hohen Belastung durch das in den Heissgaskanal 14 einströmende Heissgas 15 ausgesetzt. Es treten daher häufig bei diesen Schaufeln zuerst Defekte auf, die sich in einem Abblättern der thermischen Schutzschicht bemerkbar machen, die auf der Oberfläche der Laufschaufeln angebracht ist. Wenn diese Defekte in der Schutzschicht nicht umgehend behoben werden, wird das Grundmaterial der Schaufeln durch Oxidation und/oder Korrosion angegriffen und es kann zu grösseren Schäden kommen, die über die Oberfläche hinausgehen. Es ist deshalb wichtig, derartige Beschädigungen der Schutzschicht möglichst schnell und mit möglichst geringem Aufwand und geringer Stillstandszeit der Gasturbine zu beseitigen.

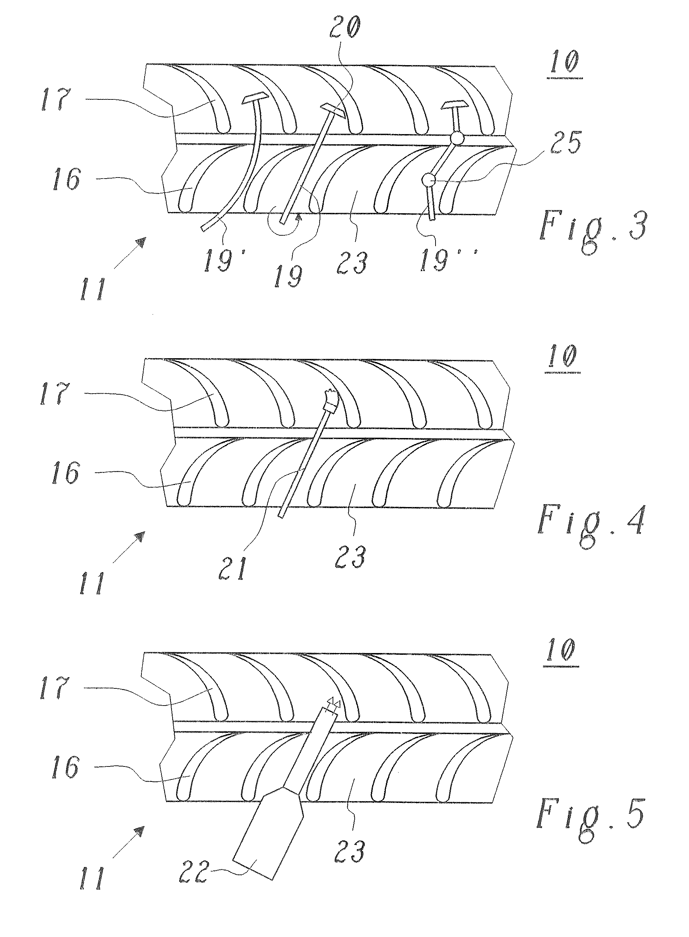

Gemäss der Erfindung werden nun die beschädigten Oberflächen der Laufschaufeln 17 der ersten Reihe im eingebauten Zustand der Schaufeln repariert, indem vom Eingang des Turbinenteils 14 her durch die Zwischenräume (23 in Fig. 3) zwischen den Leitschaufeln 16 hindurch entsprechende Bearbeitungsvorrichtungen in den Heissgaskanal 14 eingeführt und zur Bearbeitung der Oberfläche der Laufschaufeln 17 eingesetzt werden. In der axialen Richtung gesehen überlappen die Leitschaufeln 16 zwar (Fig. 2; die Laufschaufeln 17 sind daher nur gestrichelt eingezeichnet), jedoch können gemäss Fig. 3-5 bei geeigneter Winkelstellung der Leitschaufeln 16 und Laufschaufeln 17 zueinander durch die (schräg verlaufenden) Zwischenräume 23 zwischen den Leitschaufeln 16 die dem Heissgas besonders ausgesetzten Druckflächen der Laufschaufeln 17 leicht mit einer Bearbeitungsvorrichtung erreicht werden, wenn diese entsprechend ausgebildet bzw. geführt wird (Fig. 3-5).

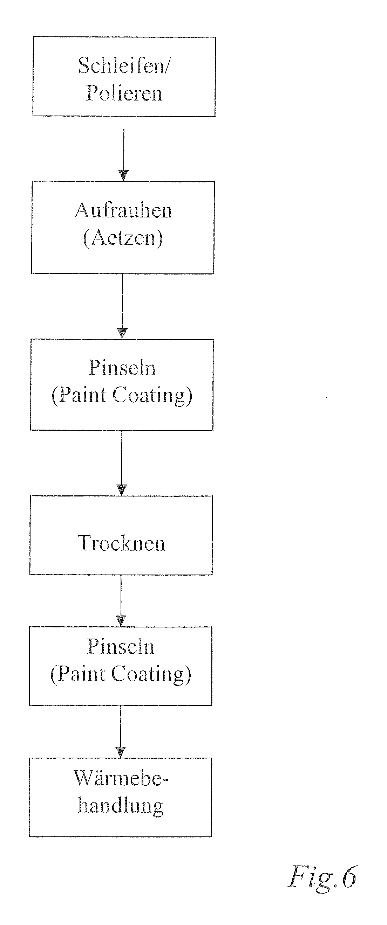

Der schematische Ablauf des Reparaturverfahren ist mit seinen wesentlichen Schritten in Fig. 6 wiedergegeben: Zunächst werden in einem ersten Schritt die beschädigten Bereiche der Beschichtung von der Laufschaufel entfernt. Dies geschieht vorzugsweise durch einen (mechanischen) Schleifprozess, dem ein Polierprozess folgen kann, um die Oberfläche zu glätten. Hierzu kann gemäss Fig. 3 eine rotierende Schleifvorrichtung 19 mit einem Schleifkopf 20 durch den Zwischenraum 23 zur Laufschaufel 17 hin geführt werden. Je nach Platzverhältnissen und Ausdehnung des beschädigten Bereichs kann eine starre Schleifvorrichtung 19, eine flexible, in sich bewegliche Schleifvorrichtung 19' oder eine mit mehreren Gelenken 25 versehene Schleifvorrichtung 19" eingesetzt werden. Andere abtragende Verfahren wie Sandstrahlen oder dgl. sind aber auch denkbar.

Nach dem Polieren wird die bearbeitete Oberfläche durch Aufrauhen für die Aufnahme einer Ersatzbeschichtung vorbereitet. Das Aufrauhen erfolgt vorzugsweise auf chemischem Wege durch Anätzen der Oberfläche. Ist die Schaufel auf diese Weise für eine gute Haftung der Ersatzbeschichtung vorbereitet, wird gemäss Fig. 4 mit einem Pinsel 21 ein Film einer Flüssigkeit auf die Schaufel aufgetragen, die nach einer thermischen Behandlung die Ersatzbeschichtung ausbildet. Eine solche Flüssigkeit bzw. Aufschwemmung ist beispielsweise unter der Bezeichnung "SermaLoy J" im Handel erhältlich und bildet bei einer thermischen Nachbehandlung durch Diffusion eine Beschichtung mit einer aluminiumhaltigen Legierung ("aluminide diffusion coating") aus.

Der Flüssigkeitsfilm wird nach dem Aufbringen gemäss Fig. 5 z.B. mittels eines in den Zwischenraum 23 eingeführten Heissluftgebläses 22 getrocknet. Danach kann noch mal Flüssigkeit aufgepinselt werden.

Hat der auf die Schaufel aufgebrachte Film die notwendige Dicke und Konsistenz, kann er zur Bildung der Ersatzbeschichtung einer thermischen Nachbehandlung unterzogen werden, in deren Verlauf eine Eindiffusion in die Schaufel stattfindet. Grundsätzlich ist es denkbar, diese thermische Nachbehandlung als separaten Prozessschritt an das Auftragen des Films anzuschliessen. Besonders einfache ist es jedoch, wenn für die thermische Behandlung das Aufheizen der Gasturbine bei der auf die Reparatur folgenden Inbetriebnahme verwendet wird.

### BEZUGSZEICHENLISTE

- 10: Gasturbine
- 11: Turbinenteil
- 12: Rotor
- 13: Heissgasgehäuse
- 14: Heissgaskanal
- 15: Heissgas (aus der Brennkammer)
- 16: Leitschaufel (1. Reihe)
- 17: Laufschaufel (1. Reihe)
- 18: Leitschaufel (2. Reihe)
- 19,19',19": Schleifvorrichtung
- 20: Schleifkopf
- 21: Pinsel
- 22: Heissluftgebläse
- 23: Zwischenraum
- 24: Achse
- 25: Gelenk

## Patentansprüche

1. Verfahren zum Reparieren von beschädigten Laufschaufeln (17) des Turbinenteils (11) einer Gasturbine (10), bei welchem Verfahren zumindest die Oberfläche der im Turbinenteil (11) sitzenden und von einem Heissgasgehäuse (13) umgebenden Laufschaufeln (17) von aussen durch eine geeignete Öffnung (23) bearbeitet wird, **dadurch gekennzeichnet, dass** diejenigen Laufschaufeln (17) bearbeitet werden, welche am Eingang des Turbinenteils (11) in einer ersten Reihe hinter einer ersten Reihe von Leitschaufeln (16) angeordnet sind, und dass als Öffnungen zum Bearbeiten der Laufschaufeln (17) die Zwischenräume (23) zwischen den Leitschaufeln (16) der ersten Reihe verwendet werden.

2. Verfahren nach Anspruch 1, **dadurch gekennzeichnet, dass** zur Bearbeitung der Laufschaufeln (17) Bearbeitungsvorrichtungen (19, 20, 21, 22) verwendet werden, welche von aussen durch die Zwischenräume (23) zwischen den Leitschaufeln (16) der ersten Reihe bis zu den Laufschaufeln (17) einführbar sind.

3. Verfahren nach Anspruch 2, **dadurch gekennzeichnet, dass** die Bearbeitungsvorrichtungen (19, 20, 21, 22) in sich beweglich, insbesondere biegsam, und/oder ein- oder mehrfach gelenkig ausgebildet sind.

4. Verfahren nach einem der Ansprüche 2 oder 3, **dadurch gekennzeichnet, dass** die Bearbeitungsvorrichtungen eine Schleifvorrichtung (19) zum Schleifen und/oder Polieren der Oberfläche der Laufschaufeln (17) umfassen.

5. Verfahren nach einem der Ansprüche 2 bis 4, **dadurch gekennzeichnet, dass** die Bearbeitungsvorrichtungen einen Pinsel (21) zum Auftragen eines Flüssigkeitsfilms auf die Oberfläche der Laufschaufeln (17) umfassen.

6. Verfahren nach einem der Ansprüche 2 bis 5, **dadurch gekennzeichnet, dass** die Bearbeitungsvorrichtungen eine Vorrichtung zum Trocknen eines auf der Oberfläche der Laufschaufeln (17) befindlichen Flüssigkeitsfilms, insbesondere in Form eines Heissluftgebläses (22), umfassen.

7. Verfahren nach einem der Ansprüche 1 bis 6, **dadurch gekennzeichnet, dass** die Laufschaufeln (17) auf ihrer Oberfläche mit einer schützenden Beschichtung versehen sind, und dass durch die Bearbeitung im Betrieb der Gasturbine (10) entstandene fehlerhafte Bereiche der Beschichtung entfernt und durch eine Ersatzbeschichtung ersetzt werden.

8. Verfahren nach Anspruch 7, **dadurch gekennzeichnet, dass** in einem ersten Schritt durch einen Schleifprozess die fehlerhafte Beschichtung entfernt wird, dass in einem zweiten Prozess im Bereich der entfernten Beschichtung ein Film aufgetragen wird, welcher bei einer anschliessenden thermischen Behandlung eine schützende Ersatzbeschichtung ausbildet, und dass in einem dritten Schritt die mit dem Film versehenen Laufschaufeln einer thermischen Behandlung unterzogen werden.

9. Verfahren nach Anspruch 8, **dadurch gekennzeichnet, dass** der Film in flüssiger Form auf die Oberfläche der Laufschaufeln (17) aufgetragen und vor der anschliessenden thermischen Behandlung einem Trocknungsprozess unterworfen wird.

10. Verfahren nach einem der Ansprüche 8 oder 9, **dadurch gekennzeichnet, dass** die Oberfläche der Laufschaufeln (17) vor dem Aufbringen des Films, insbesondere durch Ätzen, aufgerauht wird.

11. Verfahren nach einem der Ansprüche 8 bis 10, **dadurch gekennzeichnet, dass** die Oberfläche der Laufschaufeln (17) unmittelbar nach dem Schleifen poliert wird.

12. Verfahren nach Anspruch 9, **dadurch gekennzeichnet, dass** der Film mehrfach aufgetragen und zwischen zwei Auftragsvorgängen jeweils einem Trocknungsprozess unterworfen wird.

13. Verfahren nach Anspruch 8, **dadurch gekennzeichnet, dass** als thermische Behandlung das Aufheizen der Gasturbine (10) bei der auf die Reparatur folgenden Inbetriebnahme verwendet wird.
